# EUROPEAN PATENT APPLICATION

(11) **EP 3 434 754 A1**
(43) Date of publication of application: **30.01.2019**
(21) Application number: 17769898.2
(22) Date of filing: 07.03.2017
(51) Int. Cl.: C10M 103/00, A61C 13/20, B22C 3/00, B28B 3/00

(54) **WAX PATTERN SURFACE-TREATING AGENT**

(30) Priority: 24.03.2016 JP 2016060528
(71) Applicant: GC Corporation, Tokyo 113-0033 (JP)
(72) Inventor: YOSHINAGA, Masatoshi, Tokyo 174-8585 (JP); MORI, Daizaburo, Tokyo 174-8585 (JP); SATO, Takuya, Tokyo 174-8585 (JP); MASHIO, Go, Tokyo 174-8585 (JP); FUJIMOTO, Tatsuya, Tokyo 174-8585 (JP); YOKOHARA, Hayato, Tokyo 174-8585 (JP); HOSHINO, Tomohiro, Tokyo 174-8585 (JP); MIYAKE, Takahiro, Tokyo 174-8585 (JP)
(74) Representative: Müller-Boré & Partner Patentanwälte PartG mbB
(86) International application number: PCT/JP2017/008978
(87) International publication number: WO 2017/163853

(57) **Abstract**

A wax pattern surface-treating agent includes a solvent, boron nitride, and at least one surfactant selected from a group consisting of an anionic surfactant, a cationic surfactant, a non-ionic surfactant, and an amphoteric surfactant.

## Description

### TECHNICAL FIELD

The present invention relates to a wax pattern surface-treating agent.

### BACKGROUND ART

When a portion of a tooth is removed or lost through a dental procedure or the like, because the removed portion or lost portion cannot be restored naturally, a dental prosthesis is arranged in the removed portion or lost portion. Metal has conventionally been used as the material for a dental prosthesis. However, from the viewpoint of aesthetics, dental prostheses made of ceramics are increasingly being used in recent years.

A dental prosthesis made of ceramics may be formed, for example, by first investing a wax pattern that is molded into a shape corresponding to the dental prosthesis to be formed in investment material and burning out the wax pattern after the investment material has set to form a mold. Then, by heating a ceramic block and press molding the ceramic block into the above mold, a ceramic dental prosthesis having a desired shape may be fabricated.

For example, Patent Document 1 describes a technique for fabricating a ceramic dental prosthesis using one press pipeline and at least one mold cavity connected to the press pipeline via at least one connecting conduit, wherein press pressure is applied to unprocessed material that has been inserted into the press pipeline while heating the unprocessed material such that the raw material of the unprocessed material is filled into the mold cavity, resulting in a sintered ceramic dental prosthesis being fabricated.

### PRIOR ART DOCUMENTS

### PATENT DOCUMENTS

Patent Document 1: Japanese Unexamined Patent Publication No. 2009-112818

### SUMMARY OF THE INVENTION

### PROBLEM TO BE SOLVED BY THE INVENTION

However, when a conventional ceramic block is press molded, roughness may occur on the ceramic surface of the ceramic that has been molded with a mold. Depending on the degree of roughness, the molded ceramic may have to be subjected to polishing or the like to remove the roughness after being removed from the mold.

The present invention has been conceived in view of the foregoing problems associated with the prior art, and an aspect of the present invention is directed to providing a wax pattern surface-treating agent that is capable of preventing roughening of a ceramic surface when molding a ceramic block with a mold.

### MEANS FOR SOLVING THE PROBLEM

According to one embodiment of the present invention, a wax pattern surface-treating agent is provided that includes a solvent, boron nitride, and at least one surfactant selected from a group consisting of an anionic surfactant, a cationic surfactant, a non-ionic surfactant, and an amphoteric surfactant.

### ADVANTAGEOUS EFFECT OF THE INVENTION

According to an aspect of the present invention, a wax pattern surface-treating agent may be provided that is capable of preventing roughening of a ceramic surface when molding a ceramic block with a mold.

### EMBODIMENTS FOR IMPLEMENTING THE INVENTION

In the following, embodiments of the present invention will be described. However, the present invention is not limited to the specific embodiments described below, and numerous variations and modifications may be made without departing from the scope of the present invention.

### (Wax Pattern Surface-Treating Agent)

In the following, an example configuration of a wax pattern surface-treating agent according to an embodiment of the present invention will be described.

The wax pattern surface-treating agent according to the present embodiment includes a solvent, boron nitride, and at least one surfactant selected from a group consisting of an anionic surfactant, a cationic surfactant, a nonionic surfactant, and an amphoteric surfactant.

The inventors of the present invention investigated the cause of roughness of the ceramic surface when pressing-molding a ceramic block with a mold and recognized that the ceramic that has been filled into the mold partially seizes onto the mold and presumably causes the roughness of the ceramic surface. Such a seizure is thought to occur as a result of the surface of the sintered body of investment material constituting the mold melting and reacting with the ceramic when press-molding the ceramic block.

As a measure for preventing the occurrence of such seizure, the temperature at the time of press-molding may be lowered, for example. However, in this case, it will become difficult to fill the mold with ceramic, and a dental prosthesis having a desired shape may not be easily obtained.

In this respect, the inventors of the present invention conducted further investigations on a method of preventing the occurrence of roughness on the ceramic surface without lowering the temperature at the time of press-molding. Consequently, the inventors discovered that by treating the surface of a wax pattern having a shape corresponding to the shape of a dental prosthesis to be formed with a surface-treating agent and using the wax pattern to fabricate a mold, seizure of the ceramic can be prevented and roughening of the surface of the dental prosthesis to be formed can be prevented, and thus arrived at the present invention.

In the following, each component contained in the wax pattern surface-treating agent according to the present embodiment will be described.

First, the solvent will be described.

The solvent is not particularly limited, and any liquid that is capable of dispersing the other components including boron nitride and the surfactant can be used. For example, the solvent preferably includes at least one substance selected from a group consisting of water, ethanol, methanol, propanol, butanol, pentanol, acetone, tetrahydrofuran, and methyl ethyl ketone.

Note, however, that because the solvent is a component that is added so that the boron nitride and the surfactant contained in the wax pattern surface-treating agent can be uniformly coated on the surface of the wax pattern, the solvent is preferably a substance that easily evaporates after being coated on the surface of the wax pattern. Also, the solvent preferably has relatively low reactivity with the wax pattern.

In this respect, the solvent preferably includes at least one substance selected from a group consisting of ethanol, methanol, propanol, butanol, pentanol, tetrahydrofuran, and methyl ethyl ketone.

In the following, the boron nitride will be described.

As described above, the mold used for fabricating a dental prosthesis can be formed by investing a wax pattern having a shape corresponding to the shape of the dental prosthesis to be formed in investment material, and burning out the wax pattern after the investment material is set. Because the wax pattern is burned out in the process of forming the mold as described above, a cavity corresponding to the wax pattern is formed in the mold.

In the case of using the wax pattern surface-treating agent according to the present embodiment, the surface of the wax pattern is coated with the wax pattern surface-treating agent beforehand and the surface-treated wax pattern is then invested in the investment material. Thereafter, a mold can be formed in the same manner as described above. Of the components included in the wax pattern surface-treating agent according to the present embodiment, boron nitride has a high boiling point such that it will not be vaporized even during the time the wax pattern is burned out.

Thus, the boron nitride included in the wax pattern surface-treating agent remains substantially uniformly dispersed on the surface of the cavity corresponding to the wax pattern formed in the mold. The boron nitride dispersed substantially uniformly on the surface of the cavity can prevent the ceramic introduced into the mold from seizing onto the mold when the ceramic block is press-molded in the mold.

The boron nitride may be in powder form, for example, and in this case, its particle diameter and the like are not particularly limited. However, the boron nitride preferably has a suitable particle diameter for enabling the boron nitride to be easily dispersed in the wax pattern surface-treating agent and easily coated uniformly on the surface of the wax pattern. In this respect, the boron nitride preferably has an average particle diameter that is less than or equal to 20 µm, and more preferably less than or equal to 15 µm. The lower limit of the average particle diameter is not particularly limited, but from the viewpoint of handling when preparing the wax pattern surface-treating agent, for example, the average particle diameter of the boron nitride is preferably greater than or equal to 0.01 µm.

Note that the term "average particle diameter" as used herein means the particle diameter at an integrated value of 50% in a particle diameter distribution obtained by the laser diffraction/scattering method.

The content of boron nitride in the wax pattern surface-treating agent is not particularly limited. For example, the content of boron nitride in the wax pattern surface-treating agent may be suitably selected according to the coating time and/or the coating amount of the wax pattern surface-treating agent so that when press-molding a ceramic block after forming a mold, roughening of the ceramic surface can be prevented. From the viewpoint of more reliably preventing the roughening of the ceramic surface, the wax pattern surface-treating agent according to the present embodiment preferably contains boron nitride at 0.02 mass% or more, and more preferably 0.1 mass% or more, for example. More preferably, the wax pattern surface-treating agent according to the present embodiment contains boron nitride at 1% by mass or more.

The upper limit of the content of boron nitride is not particularly limited, but the content of boron nitride is preferably selected in view of handling when coating the wax pattern surface-treating agent on the surface of the wax pattern. For example, the content of boron nitride in the wax pattern surface-treating agent is preferably 20% by mass or less, and more preferably 15% by mass or less. More preferably, the content of boron nitride in the wax pattern surface-treating agent is 10% by mass or less.

In the following, the at least one surfactant selected from a group consisting of an anionic surfactant, a cationic surfactant, a nonionic surfactant, and an amphoteric surfactant will be described.

By adding a surfactant, boron nitride can be more uniformly dispersed in the wax pattern surface-treating agent according to the present embodiment, and boron nitride can be more uniformly coated on the wax pattern surface when coating the wax pattern surface-treating agent on the wax pattern surface. By fabricating a dental prosthesis with a mold formed using a wax pattern coated with boron nitride more uniformly, seizure of the ceramic onto the mold can be particularly prevented.

Also, by coating the surfactant on the surface of the wax pattern, affinity between the wax pattern and the investment material can be enhanced. As such, when investing the wax pattern in the investing material, portions other than the wax pattern may be more reliably filled with the investment material, and unintended voids may be prevented from being formed in the mold.

Note that at least one surfactant selected from a group consisting of an anionic surfactant, a cationic surfactant, a nonionic surfactant, and an amphoteric surfactant can be used.

Specific examples of the anionic surfactant include fatty acid soaps such as sodium stearate, triethanolamine palmitate, and sodium lauryl sulfate, alkyl ether carboxylic acids and salts thereof, carboxylate salts such as condensates of amino acids and fatty acids, alkyl sulfones, alkene sulfonates, sulfonates of a fatty acid ester, sulfonates of a fatty acid amide, alkyl sulfonates and alkyl sulfonate formaldehyde condensates, sulfate ester salts such as alkyl sulfate ester salts, higher secondary alcohol sulfate ester salts, alkyl sulfate ester salts and allyl ether sulfate ester salts, fatty acid ester sulfate ester salts, sulfate ester salts of fatty acid alkylol amides, polyoxyethylene alkyl sulfate ester salt, and turkey red oil, alkyl phosphates, ether phosphates, alkyl allyl ether phosphates, amidophosphates, and N-acyl amino acid based surfactants.

Specific examples of the cationic surfactant, include alkyl quaternary ammonium salts and aromatic quaternary ammonium salts such as long-chain alkyl trimethyl ammonium salt, di-long-chain alkyl dimethyl ammonium salt, long-chain alkyl dimethyl benzyl ammonium salt, dipolyoxyethylene alkyl methyl ammonium salt, dipolyoxyethylene alkyl ether dimethyl ammonium salt, and polyoxypropylene methyl diethyl ammonium salt, pyridinium salts such as an alkyl pyridinium salt, imidazoline salts such as an alkyl dihydroxyethyl imidazoline salt, N-acyl basic amino acid lower alkyl ester salts, and amine salts such as alkyl amine salts, polyamines, and amino alcohol fatty acid derivatives.

Specific examples of the nonionic surfactant include ester-based nonionic surfactants such as sorbitan fatty acid ester, glycerin fatty acid ester, polyglycerin fatty acid ester, propylene glycol fatty acid ester, polyethylene glycol fatty acid ester, sucrose fatty acid ester, polyoxyethylene fatty acid ester, polyoxyethylene sorbitan fatty acid ester, polyoxyethylene sorbitol fatty acid ester, polyoxyethylene glycerin fatty acid ester, polyoxyethylene propylene glycol fatty acid ester, polyoxyethylene hardened castor oil fatty acid ester, polyoxyethylene castor oil, polyoxyethylene hydrogenated castor oil, and the like, ether-based nonionic surfactants such as polyoxyethylene alkyl ether, polyoxyethylene alkylene alkyl ether, polyoxypropylene alkyl ether, polyoxyethylene alkyl phenyl ether, polyoxyethylene phytostanol ether, polyoxyethylene phytosterol ether, polyoxyethylene cholestanol ether, polyoxyethylene cholesteryl ether, and the like, polyoxyethylene derivatives such as polyoxyethylene-polyoxypropylene block copolymers, siloxane-based nonionic surfactants such as polyoxyalkylene-modified organopolysiloxane, polyoxyethylene-methyl polysiloxane copolymer, polyoxypropylene-methyl polysiloxane copolymer, poly(oxyethylene·oxypropylene)-methyl polysiloxane copolymers, polyoxyalkylene·alkyl co-modified organopolysiloxane, and the like, amine-based nonionic surfactants such as polyoxyethylene alkylamine, fatty acid alkanolamide, and the like, sugar ethers, and sugar amides.

The above nonionic surfactants generally have low foaming properties and are preferably used because they can prevent foaming of the wax pattern surface-treating agent as compared with other surfactants. In particular, polyoxyethylene alkyl ether may preferably be used in view of its high preventive effect on foaming of the wax pattern surface-treating agent. The polyoxyethylene alkyl ether used preferably has a polyoxyethylene alkyl ether structure including an alkyl group having 10 to 20 carbon atoms, more preferably a polyoxyethylene alkyl ether structure including an alkyl group having 12 to 14 carbon atoms. The alkyl group in the polyoxyethylene alkyl ether structure preferably has a branched structure. Note that the alkyl group moiety of the polyoxyethylene alkyl ether used may be derived from a secondary alcohol or a tertiary alcohol, for example, so that it can have a branched structure.

Examples of commercially available product names of polyoxyethylene alkyl ether include NIKKOL BT-5, NIKKOL BT-7, NIKKOL BT-9, NIKKOL BT-12 (manufactured by Nikko Chemicals Co., Ltd.), NOIGEN ET-65, NOIGEN ET-95, NOIGEN ET-115, NOIGEN ET-135, NOIGEN ET-165 (manufactured by Daiichi Kogyo Seiyaku Co., Ltd.), LEOCOL SC-50, LEOCOL SC-70, LEOCOL SC-90, and LEOCOL SC-120 (manufactured by Lion Specialty Chemicals Co., Ltd.).

Specific examples of the amphoteric surfactant include carbobetaine type amphoteric surfactants such as alkyldimethylaminoacetic acid betaine, fatty acid amidopropyldimethylaminoacetic acid betaine, and alkyl dihydroxyethylaminoacetic acid betaine; sulfobetaine type amphoteric interfaces such as alkylsulfobetaines; amidoamine type (imidazoline type) amphoteric surfactants such as N-fatty acid acyl-N-carboxymethyl-N-hydroxyethylethylenediamine salt and N-fatty acid acyl-N-carboxymethoxyethyl-N-carboxymethylethylenediamine disodium salt; amino acid type amphoteric surfactants such as N-[3-alkyloxy-2-hydroxypropyl]arginine salt; and alkyliminodicarboxylate type amphoteric surfactants.

Note that only one type of surfactant may be used, or a combination of two or more types of surfactants may be used.

The content of the surfactant is not particularly limited and can be suitably selected. However, in order to sufficiently enhance the dispersibility of the boron nitride in the wax pattern surface-treating agent and the affinity between the wax pattern and the investment material, the wax pattern surface-treating agent preferably contains the surfactant at a content ratio of at least 0.01% by mass, and more preferably at least 0.1% by mass.

The upper limit of the content of the surfactant is also not particularly limited, but for example, the content ratio of the surfactant is preferably less than or equal to 8% by mass, and more preferably less than or equal to 4% by mass. This is because no substantial change in the effects of the surfactant occurs even when the surfactant is added to constitute more than 8% by mass of the wax pattern surface-treating agent.

The components contained in the wax pattern surface-treating agent according to the present embodiment are not limited to the above-mentioned components, and optional components can be added as necessary. Specifically, for example, silica or zirconia particles which do not react with heat during formation may be blended as a film forming material; ethylene glycol, diethylene glycol, butanediol, glycerol or the like may be added as a wetting agent to the wax pattern; or a watersoluble polymer or the like may be added to adjust the viscosity of the wax pattern surface-treating agent.

The method for preparing the wax pattern surface-treating agent according to the present embodiment is not particularly limited. For example, the wax pattern surface-treating agent may be prepared by mixing the above-mentioned components and one or more of the optional components as desired.

By coating the surface of a wax pattern with the wax pattern surface-treating agent according to the present embodiment as described above to form a mold using the surface-treated, wax pattern and fabricating a ceramic dental prosthesis using such a mold, the occurrence of roughness on the surface of the dental prosthesis may be prevented.

Note that the wax pattern surface-treating agent according to the present embodiment may be suitably used for fabricating a ceramic dental prosthesis. However, the wax pattern surface-treating agent according to the present embodiment may also be suitably used for fabricating ceramic members other than a dental prosthesis.

### [Examples]

In the following, specific examples and comparative examples will be described. Note, however, that the present invention is not limited to the specific examples described below.

### [Example 1]

### (Preparation of Wax Pattern Surface-Treating Agent)

98 parts by mass of methyl ethyl ketone as a solvent, 2 parts by mass of boron nitride powder (with average particle diameter of 4 µm), and 0.2 parts by mass of sodium lauryl sulfate as an anionic surfactant were mixed together using a mixer to prepare a wax pattern surface-treating agent.

### (Fabrication of Dental Prosthesis)

A dental impression of the teeth of a patient was taken using a silicone rubber impression material. Then, gypsum was poured into the dental impression to form a gypsum model.

Then, a wax pattern was formed on the gypsum model using dental wax (manufactured by GC Corporation, product name: Inlay Wax). Then, a sprue having a diameter of 2.5 mm was formed.

Then, the wax pattern and the sprue were attached to a crucible former. Then, the above-described wax pattern surface-treating agent was coated on the surface of the wax pattern and the surface of the sprue using a spray (wax pattern surface-treating agent coating step).

Then, a ring having a liner formed therein was arranged on the peripheral portion of the base of the crucible former to which the wax pattern and the sprue wire are attached so that the ring surrounds the wax pattern and the sprue.

Then, a slurry-like investment material (also referred to as a mold material) was poured into the interior of the ring, and the wax pattern and the sprue were invested in the investment material (investing step).

Note that a phosphate type investment material (manufactured by GC Europe, product name: Multi press vest) was used as the investment material.

After leaving the investment material to set, the crucible former was removed and the investment material including the wax pattern 11 was heated at 850 °C for 30 minutes in the air atmosphere to burn out the wax pattern to form a mold (burnout step).

After the burnout step, it was confirmed that the wax pattern and the sprue were removed.

Then, a lithium disilicate ceramic block was placed in the sprue of the mold, and press molding was performed by pressing the ceramic block with a piston while heating the mold and the ceramic block at 930 °C in the air atmosphere. By performing the press molding process, the sprue portion and void portion in the mold was filled with ceramic material.

After cooling, the ceramic molded body was taken out of the mold and the sprue portion was cut to obtain a dental prosthesis.

A total of ten dental prostheses including the above dental prosthesis were produced in a similar manner, and the dental prostheses were subjected to sandblasting with glass beads at a pressure of 0.4 MPa to remove deposits on their surface. Then, visual evaluation was performed to determine whether the surfaces included reaction layers. The reaction layer is an intermediate layer between the investment material and the ceramic material and constitutes roughness as described in the present embodiment. In the visual evaluation, a dental prosthesis having a reaction layer with a diameter greater than or equal to 1 mm was evaluated as a rejected product, and a dental prosthesis having a reaction layer with a diameter less than 1 mm was evaluated as an accepted product that was able to control roughening.

In the present example, all of the ten dental prostheses produced were deemed accepted products.

### [Example 2 to Example 8]

In Examples 2 to 8, dental prostheses were produced and evaluated in the same manner as in Example 1, except that the wax pattern surface-treating agent were prepared to have different compositions as indicated in Table 1 below. The evaluation results are also indicated in Table 1.

Note that in Example 3 where water was used as the solvent of the wax pattern surface-treating agent, after coating the surface of the wax pattern and the surface of the sprue with the wax pattern surface-treating agent by spraying, the wax pattern surface-treating agent was dried with a drier set to 45 °C before performing the investing step.

In Examples 3, 4 and 6, boron nitride powder having an average particle diameter of 6 µm or 12 µm was used as indicated in Table 1.

Also, the polyoxyethylene alkyl ether used as the surfactant as indicated in Table 1 preferably has an alkyl group with a number of carbons greater than or equal to 12 and less than or equal to 14 and a branched structure derived from a secondary alcohol used as a raw material for synthesis.

### [Comparative Examples 1 to 3]

In Comparative Example 1 and Comparative Example 2, dental prostheses were prepared and evaluated in the same manner as in Example 1, except that the wax pattern surface-treating agent was prepared to have different compositions as indicated in Table 1. In Comparative Example 1, boron nitride was not added, and in Comparative Example 2, no surfactant was added. The evaluation results are also indicated in Table 1.

In Comparative Example 3, a dental prosthesis was prepared and evaluated in the same manner as in Example 1, except that the wax pattern surface-treating agent coating step was not performed. The evaluation results are indicated in Table 1.

**[Table 1]**

| | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | COMPARATIVE EXAMPLE 1 | COMPARATIVE EXAMPLE 2 | COMPARATIVE EXAMPLE 3 |
|---|---|---|---|---|---|---|---|---|---|---|---|---|---|
| WAX PATTERN SURFACE-TREATING AGENT COMPONENTS (PARTS BY MASS) | SOLVENT | METHYL ETHYL KETONE | 98 | - | - | - | 98 | 98 | - | - | 98 | 98 | N/A |
| | | ETHANOL | - | 98 | - | - | - | - | - | - | - | - | |
| | | WATER | - | - | 98 | - | - | - | - | - | - | - | |
| | | 2-PROPANOL | - | - | - | 98 | - | - | 98 | 98 | - | - | |
| | BORON NITRIDE | AVERAGE PARTICLE DIAMETER 4 *µ*m | 2 | 2 | - | - | 15 | - | 10 | 4 | - | 2 | |
| | | AVERAGE PARTICLE DIAMETER 6 *µ*m | - | - | 2 | - | - | 0.02 | - | - | - | - | |
| | | AVERAGE PARTICLE DIAMETER 12 *µ*m | - | - | - | 2 | - | - | - | - | - | - | |
| | SURFACTANT | SODIUM LAURYL SULFATE | 0.2 | 0.2 | - | - | 0.2 | - | 8 | - | - | - | |
| | | POLYOXYETHYLENE ALKYL ETHER | - | - | 0.2 | 0.2 | - | 0.2 | - | 2 | 0.2 | - | |
| EVALUATION RESULT | NUMBER ACCEPTED/NUMBER EVALUATED | | 10/10 | 10/10 | 10/10 | 10/10 | 8/10 | 8/10 | 10/10 | 10/10 | 0/10 | 4/10 | 0/10 |

It can be appreciated from comparison of the evaluations results of Examples 1 to 4, Example 7, and Example 8 as indicated in Table 1 that various solvents and surfactants can be used. Also, it can be appreciated that the average particle diameter of boron nitride is not particularly limited.

Note, however, that in Example 3 where water was used as the solvent, the wax pattern surface-treating agent had to be dried after being coated on the surface of the wax pattern and the surface of the sprue as described above. This suggests that it is more preferable to use a volatile component as the solvent.

Also, when preparing the wax pattern surface-treating agent, a substantial amount of foam was formed in Examples 1, 2, and 7 such that the foam had to be removed before performing the wax pattern surface-treating agent coating step. In contrast, in Examples 3, 4 and 8, almost no foam was observed such that the wax pattern surface-treating agent coating step could be performed immediately after preparing the wax pattern surface-treating agent.

In Example 5, 8 out of 10 dental prostheses were deemed accepted products thereby confirming that roughening could be sufficiently controlled. However, because boron nitride powder was added at a relatively large amount of 15 parts by mass, in the wax pattern surface-treating agent coating step, when the wax pattern surface-treating agent was coated by spraying in the same manner as in Example 1, clogging occurred at the nozzle. As such, the wax pattern surface-treating agent was coated using a brush in Example 5. As a result, it took a longer time to perform the wax pattern surface-treating agent coating step as compared with Example 1.

In Example 6, 8 out of 10 dental prostheses were deemed accepted products thereby confirming that roughening could be sufficiently controlled. However, because boron nitride powder was added at a relatively small amount of 0.02 parts by mass, there were cases in which a part of the wax pattern surface could not be coated with a sufficient amount of boron nitride thereby resulting in two of the dental prostheses being deemed rejected products.

In Comparative Example 1 and Comparative Example 2, boron nitride powder or a surfactant was not added to the wax pattern surface-treating agent. As a result, in Comparative Example 1 where boron nitride powder was not added, roughening was observed in all the dental prostheses produced.

In Comparative Example 2 where a surfactant was not added, only 4 out of 10 dental prostheses were deemed accepted products. It can be presumed that because no surfactant was added, boron nitride could not be sufficiently dispersed in the wax pattern surface-treating agent and boron nitride could not be evenly coated on the surface of the wax pattern.

In Comparative Example 3, because the wax pattern surface-treating agent coating step was not performed, roughening was observed on the surfaces of all the dental prostheses produced.

Although a wax pattern surface-treating agent according to the present invention has been described above with respect to illustrative embodiments and examples, the present invention is not limited to the above embodiments and examples. That is, various modifications and changes may be made within the scope of the present invention as described in the claims.

The present application is based on and claims the benefit of priority of Japanese Patent Application No. 2016-060528 filed on March 24, 2016, the entire contents of which are herein incorporated by reference.

## Claims

1. A wax pattern surface-treating agent comprising:
a solvent;
boron nitride; and
at least one surfactant selected from a group consisting of an anionic surfactant, a cationic surfactant, a non-ionic surfactant, and an amphoteric surfactant.

2. The wax pattern surface-treating agent according to claim 1, wherein
a content ratio of the boron nitride is greater than or equal to 0.02% by mass and less than or equal to 20% by mass; and
a content ratio of the at least one surfactant is greater than or equal to 0.01% by mass and less than or equal to 8% by mass.

3. The wax pattern surface-treating agent according to claim 1 or 2, wherein
the solvent includes at least one substance selected from a group consisting of water, ethanol, methanol, propanol, butanol, pentanol, acetone, tetrahydrofuran, and methyl ethyl ketone.
